# EUROPEAN PATENT APPLICATION

(11) **EP 1 585 249 A1**
(43) Date of publication of application: **12.10.2005**
(21) Application number: 04701684.5
(22) Date of filing: 13.01.2004
(51) Int. Cl.: H04L 9/32, H04L 9/08

(54) **CONTENT REPRODUCTION DEVICE, LICENSE ISSUING SERVER, AND CONTENT REPRODUCTION SYSTEM**

(30) Priority: 14.01.2003 JP 2003005193
(71) Applicant: MATSUSHITA ELECTRIC INDUSTRIAL CO., LTD., Kadoma-shi, Osaka 571-8501 (JP)
(72) Inventor: YAMAMOTO, Masaya, Hirakata-shi, Osaka 573-1151 (JP); NAKAHARA, Tohru, Osaka-shi, Osaka 532-0022 (JP); TOKUDA, Katsumi, Ikeda-shi, Osaka 563-0038 (JP)
(74) Representative: Pautex Schneider, Nicole Véronique
(86) International application number: PCT/JP2004/000143
(87) International publication number: WO 2004/064318

(57) **Abstract**

The first reproduction terminal (101) includes: a cipher communication unit (202) operable to perform cipher communication with a license issuance server (103), and obtain license information generated under a rights management method selected by a user, from among a plurality of rights management methods for protecting content copyrights; a license storage unit (203) operable to store the obtained license information; a plurality of use condition judgment units (204) corresponding respectively to each rights management method, operable to judge, based on a use condition included in license information generated under a corresponding rights management method, whether or not the use of a content corresponding to the license information is permitted; a method selection unit (205) operable to select a use condition judgment unit (204) corresponding to a rights management method by identifying such rights management method under which a license was generated, and cause such selected use condition judgment unit (204) to judge whether or not use of a condition is permitted; and a reproduction unit (206) operable to reproduce the content when it is judged that use is permitted.

## Description

### Technical Field

The present invention relates to a content reproduction apparatus for reproducing a content protected by a copyright according to use condition, a license issuance server, and a content reproduction system.

### Background Art

Systems, referred to as content distribution systems, have come to a stage of practical use in recent years. These systems distribute the digital content of music, video, games, and so on, (hereinafter, described as "content") from a server apparatus to a terminal apparatus via communication networks such as the internet, digital broadcasting, and the like. They also enable content use on a terminal apparatus.

In the conventional content distribution system, copyright protection technology is used to protect content copyrights and prevent the unauthorized use of contents by users with malicious intents, and the like. Copyright protection technology refers specifically to technology that makes use of encryption technology, and the like, to securely control such forms of content use as the reproduction of a content, or the copying of a content onto recording media, by a user.

For example, a system is disclosed in patent document (official publication of Japanese Laid-Open Patent Application No. 2000-293439) as an example of a content distribution system. In such system, a server apparatus generates a license that includes a partial use condition, such as the number of reproductions for a content permitted for use on a terminal apparatus, and the like, and then distributes such license to a terminal apparatus. The system then controls content use on the terminal apparatus, based on the logical sum (OR) and logic product (AND) of the partial use condition. Hereinafter, methods that implement the protection of content copyrights through the use of copyright protection technology, such as the one mentioned above, shall be referred to as rights management methods. Moreover, the difference in rights management methods specifically relates to the difference in the physical data structure (data length, sequence, encryption method, and so on) of use condition information and license information indicating the details of a right for content use, as well as the difference in the interpretation method (representation format, correspondence of bit patterns and meanings, and so on) thereof.

However, copyright protection using a number of rights management methods within a single system has not been taken into consideration in existing content distribution systems. Accordingly, suitable methods for packaging a structure for copyright protection that uses a plurality of rights management methods, in a server device and a terminal apparatus are not widely known.

For example, in a terminal apparatus, in order to securely control content use based on a partial use condition included in a license received from a server, a receiving unit that receives a license from a server, a storage unit that stores the received license, and a reproduction unit that generates reproduction data from a content based on a partial use condition included in the license, and so on, are configured as one package. As such, supposing that a rights management method S1 developed by a manufacturer M1, and a rights management method S2 developed by a manufacturer M2, are to be packaged in server devices and terminal apparatuses for the services of an operator P who operates a content distribution system. In this case, the apparatus and the program for the rights management method S1, as well as the apparatus and the program for the rights management method S2, would have to be supplied for each and every terminal apparatus. Carried out in this manner, processing units performing the same process are redundantly provided within the same apparatus, resulting in considerable waste, as well as the problem of excessive costs related to packaging.

The present invention is conceived to resolve the above-mentioned existing problem and its first objective is to provide a content distribution system capable of controlling content use, based on a plurality of rights management methods, within a single system. In addition, the second objective of the present invention is the reduction of packaging costs for server apparatuses and terminal apparatuses for content distribution systems such as this.

### Disclosure of Invention

In order to resolve the issues mentioned, the content reproduction apparatus in the present invention is a content reproduction apparatus for reproducing a content that is a digital copyrighted work, based on license information that includes a use condition, said use condition being information indicating an extent of use permitted for the content, the apparatus comprising: a plurality of use condition judgment units operable to judge, based on a use condition included in each license information, whether or not use of a content corresponding to said each license information is permitted, said each license information being generated under each of a plurality of different rights management methods for realizing protection of content copyrights using copyright protection technology, and said plurality of use condition judgment units corresponding respectively to said plurality of different rights management methods; a method selection unit operable to select a use condition judgment unit that corresponds to a rights management method by identifying said right management method for the license information corresponding to the content, and cause said selected use condition judgment unit to judge whether or not use of the content is permitted; and a reproduction unit operable to reproduce the content when it is judged, by said selected use condition judgment unit, that use of said content is permitted.

In addition, the license issuance server in the present invention is a license issuance server for issuing license information for controlling use of a content on a content reproduction apparatus, comprising: a use condition storage unit operable to store, in advance, a use condition which is information indicating an extent of use permitted for the content which is a digital copyrighted work; a plurality of license generation units operable to generate license information that includes the use condition, based on a plurality of rights management methods for realizing protection of content copyrights using copyright protection technology, said plurality of license generation units corresponding respectively to said plurality of rights management methods; and a method selection unit operable to select the license generation unit corresponding to a specific rights management method requested from the content reproduction apparatus, and cause said selected license generation unit to generate the license information requested from said content reproduction apparatus.

In addition, the content reproduction system in the present invention is a content reproduction system comprising a server and a content reproduction apparatus, said server generating and issuing license information for controlling use of a content on a content reproduction apparatus, and said content reproduction apparatus reproducing the content based on the license information obtained from the server, wherein the server includes: a use condition storage unit operable to store, in advance, a use condition which is information indicating an extent of use permitted for a content which is a digital copyrighted work; a plurality of license generation units operable to generate license information that includes the use condition, based on a plurality of rights management methods for realizing protection of content copyrights using copyright protection technology, said plurality of license generation units corresponding respectively to said plurality of rights management methods; and a method selection unit operable to select the license generation unit corresponding to a specific rights management method requested from the content reproduction apparatus, and cause said selected license generation unit to generate the license information requested from said content reproduction apparatus, and the content reproduction apparatus includes: a plurality of use condition judgment units operable to judge, based on the use condition included in each license information, whether or not use of the content corresponding to said each license information is permitted, said each license information being generated under each of a plurality of different rights management methods for realizing protection of content copyrights using copyright protection technology, and said plurality of use condition judgment units corresponding respectively to said plurality of different rights management methods; a method selection unit operable to select a use condition judgment unit that corresponds to a rights management method by identifying said right management method for the license information corresponding to the content, and cause said selected use condition judgment unit to judge whether or not use of the content is permitted; and a reproduction unit operable to reproduce the content when it is judged, by said selected use condition judgment unit, that use of said content is permitted.

Moreover, the present invention can be realized, not only as a content reproduction system as the one described above, but also as single units such as the license issuance servers and content reproduction terminals which make up these content use management systems. It may also be realized as a content reproduction method in which the characteristic operations in these content reproduction systems are steps. Likewise, the present invention may also be realized as a program for the execution and functioning of such characteristic operations in general-purpose computers such as a personal computer, and the like.

According to the present invention, the sharing of a common cipher communication unit among a plurality of rights management methods becomes possible. As a result, the reduction of packaging costs in terminal apparatuses becomes possible. Likewise, by using a license storage unit, a reproduction unit, and the like, jointly, for a plurality of methods, the sharing of a single apparatus or program among a plurality of rights management methods becomes possible.

In addition, by executing a plurality of rights management methods on the same module which is made tamper resistant in terms of hardware, it becomes possible to reduce the load from authentication and cipher communication among modules within a content reproduction apparatus.

### Brief Description of Drawings

FIG. 1 is a diagram showing the overall configuration of the content reproduction system in the present embodiment.
FIG. 2 is a block diagram showing the internal configuration of the content reproduction terminal shown in FIG. 1.
FIG. 3 is a block diagram showing the internal configuration of the license issuance server shown in FIG. 1.
FIG. 4 is a table showing the data structure of content key information in the present embodiment.
FIG. 5 is a table showing the data structure of use condition information in the present embodiment.
FIG. 6A and FIG. 6B are tables showing the data structures of licenses in the rights management method S1 and the rights management method S2, in the embodiment of the present invention.
FIG. 7 is a flowchart showing the process in the content reproduction terminal, during the issuance of a license from the license issuance server shown in FIG. 1, to the content reproduction terminal.
FIG. 8A and FIG. 8B are tables showing the data structures of license issuance request messages in the rights management method S1 and the rights management method S2, in the present embodiment.
FIG. 9 is a flowchart showing the process during license generation in the license issuance server shown in FIG. 1.
FIG. 10 is a flowchart showing the process of content reproduction in the content reproduction terminal shown in FIG. 1.
FIG. 11 is a flowchart showing the process in the first content reproduction terminal, during license transfer between the content reproduction terminals shown in FIG. 1.
FIG. 12 is a table showing the data structure of a license transfer request message in the present embodiment.
FIG. 13 is a flowchart showing the process in the second content reproduction terminal shown in FIG. 1, during license transfer.
FIG. 14 is a diagram showing an example of another configuration for the first content reproduction terminal and second content reproduction terminal, in the present embodiment.

### Best Mode for Carrying Out the Invention

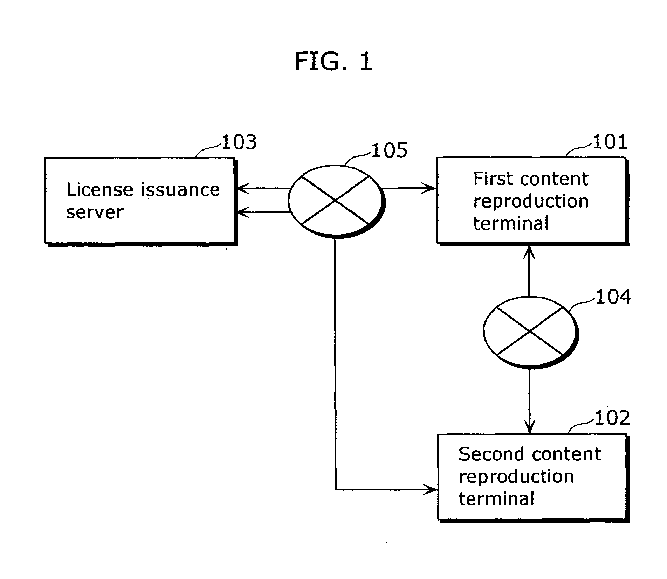

The embodiment of the present invention shall be explained, hereinafter, using FIG. 1 to FIG. 13.

First, FIG. 1 shall be used to explain the overall configuration of a content reproduction system in the present embodiment. FIG. 1 is a block diagram showing the overall configuration of a content reproduction system in the present embodiment. The content reproduction system in the present embodiment is a system where a single license issuance server generates and issues licenses which comply with different rights management methods that are designated by a contents reproduction terminal, and where contents are reproduced on a content reproduction terminal according to licenses which have a different format for each rights management method. The system includes a first content reproduction terminal 101, a second content reproduction terminal 102, and a license issuance server 103. The first content reproduction terminal 101 and the second content reproduction terminal 102 are connected via a home network 104. The first content reproduction terminal 101 and the second content reproduction terminal 102 are connected to the license issuance server 103 by way of internet 105. The first content reproduction terminal 101 and the second content reproduction terminal 102 are user-side terminal apparatuses which, in the event of content use, request the license issuance server 103 to issue a license for the use of the content, and reproduce such content according to the license issued in compliance with the request. The license issuance server 103 is a server that generates and issues licenses based on different rights management methods, in compliance to license issuance requests from the first content reproduction terminal 101 and the second content reproduction terminal 102.

It should be noted that in a conventional content distribution system, a server for distributing the content itself, a server that accepts a purchase of a content, a server that manages users, and so on, are also required. However, since these are of no relevance to the scope of the present invention, they shall be omitted from the drawings and explanations.

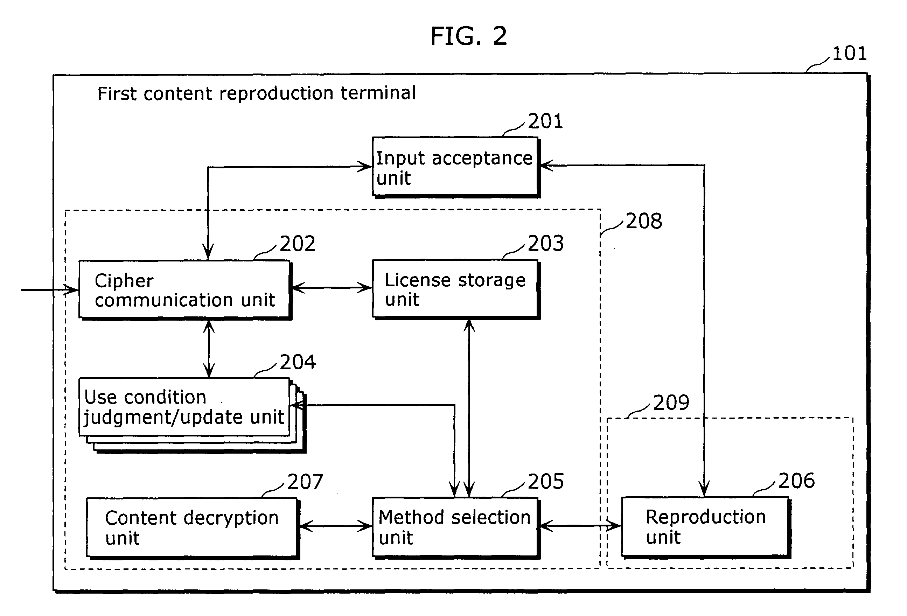

Next, FIG. 2 shall be used to explain the configuration of the first content reproduction terminal 101 in the present embodiment. FIG. 2 is a block diagram showing the configuration of the first content reproduction terminal 101 shown in FIG. 1. The first content reproduction terminal 101 is a content reproduction terminal that reproduces contents according to licenses having different formats for each rights management method. It includes an input acceptance unit 201, a cipher communication unit 202, a license storage unit 203, a plurality of use condition judgment/update units 204, a method selection unit 205, a reproduction unit 206, and a content decryption unit 207. The input acceptance unit 201 includes input operation units not shown in the diagram, such as a keyboard, and a display screen such as a monitor, and the like. It accepts an input for a choice of a content to be used, an input for a password for user authentication, and so on, from a user. The cipher communication unit 202 establishes, between itself and the license issuance server 103, a secure communication channel such as the Secure Socket Layer (SSL) which is one Secure Authentication Channel (SAC) communication methodology, and securely receives the issued license. The license storage unit 203 securely stores the license issued from the license issuance server 103. The use condition judgment/update units 204 judge whether or not the use of a content is permitted, according to the use condition described in a license. The method selection unit 205 searches the license storage unit 203 for the license corresponding to a content, or the license designated by a user. It also identifies the rights management method for such license, and specifies the use condition judgment/update unit 204 corresponding to the identified rights management method. In addition, the method selection unit 205 also includes the function of reading and relaying a use condition described in a license, to the corresponding use condition judgment/update unit 204, and making it judge whether or not the use of the content is permitted. The method selection unit 205 also has the function of forwarding the content key described in a license to the content decryption unit 207 and making it decrypt the encrypted content. Furthermore, the method selection unit 205 forwards the content decrypted by the content decryption unit 207 to the content reproduction unit 206, and makes it reproduce the content. The reproduction unit 206 reproduces the decrypted content. The content decryption unit 207 decrypts the encrypted content, using the content key forwarded by the method selection unit 205.

Furthermore, a tamper resistant unit 208 and a tamper resistant unit 209, shown enclosed in dotted lines within the diagram, indicate structural components in the first content reproduction terminal 101 that are packaged in a tamper resistant manner. Included in the tamper resistant unit 208, are the cipher communication unit 202, the license storage unit 203, the plurality of use condition judgment/update units 204, the method selection unit 205 and the content decryption unit 207. Included in the tamper resistant unit 209, is the reproduction unit 206. Here, "tamper resistant" refers to physical and logical technology for impeding access of confidential information, as well as the manipulation and causing of a system to execute unauthorized operations, through unauthorized external procedures. Tamper resistance can be applied collectively to a module of a certain fixed coverage. In the modules within the coverage of the tamper resistant unit 208, and the tamper resistant unit 209, it is possible to prevent unauthorized access and manipulation of an encryption key and a use condition of a content for use in content reproduction. In the present embodiment, the cipher communication unit 202, the license storage unit 203, the plurality of use condition judgment/update units 204, the method selection unit 205 and the content decryption unit 207, shown within the coverage of the tamper resistant unit 208, are assumed to be executed on the same CPU. The LSI making up such CPU is formed to be tamper resistant in terms of hardware. As such, the cipher communication unit 202, the license storage unit 203, the plurality of use condition judgment/update units 204, the method selection unit 205 and the content decryption unit 207 are collectively made tamper resistant. As the LSI for performing content reproduction is found separately from the CPU, the tamper resistance coverage for the reproduction unit 206 is also separate.

In addition, since a decrypted content, or the like, is communicated during communication between the method selection unit 205 and the reproduction unit 206, some form of protection is necessary. For this reason, bus encryption is used in the communication between the method selection unit 205 and the reproduction unit 206. In bus encryption, the encryption key is set by carrying out arrangements in advance, between the method selection unit 205 and the reproduction unit 206. The encryption key, or a session key exchanged using the encryption key, is used to re-encrypt the decrypted content, after which the re-encrypted content is transmitted. As a result, safe communication between both units that have been made tamper resistant becomes possible.

Moreover, as the configuration of the second content reproduction terminal 102 is the same as that of the first content reproduction terminal 101, illustration and explanation shall be omitted.

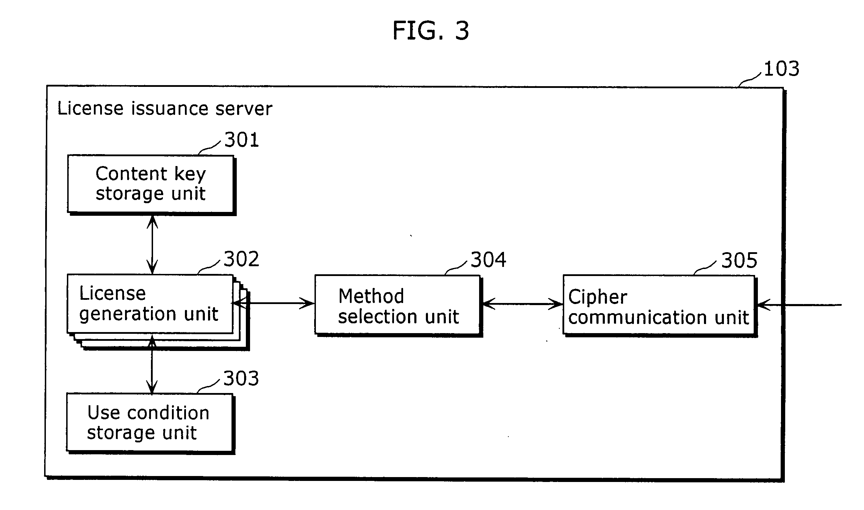

Next, FIG. 3 shall be used to explain the configuration of the license issuance server in the present embodiment. FIG. 3 is a block diagram showing the configuration of the license issuance server 103 shown in FIG. 1. The license issuance server 103 is a server that generates and issues, licenses that conform to different rights management methods in compliance to the request of a content reproduction terminal. It includes a content key storage unit 301, a plurality of license generation units 302, a use condition storage unit 303, a method selection unit 304, and a cipher communication unit 305. The content key storage unit 301 stores content key information which indicates the correspondence between a content ID and a content key. A license generation unit 302 is provided for each rights management method, and each license generation unit 302 generates a license in the format specifically set for each rights management method. The use condition storage unit 303 stores use condition information that indicates, for each customer, the extent of use permitted for a specific content. The method selection unit 304 identifies the license generation unit 302 that generates a license in the rights management method designated in a license issuance request from a content reproduction terminal. It then instructs the identified license generation unit 302 to generate the license. The cipher communication unit 305 receives the license issuance request from a content reproduction terminal, after which, in the case where license generation is successful, it establishes a secure communication channel such as an SSL, between itself and the content reproduction terminal. It then transmits the license via the established secure communication channel. Furthermore, in the case where license generation is unsuccessful, the cipher communication unit 305 transmits a message indicating the license issuance failure to the content reproduction terminal.

### (Content Key Data Structure)

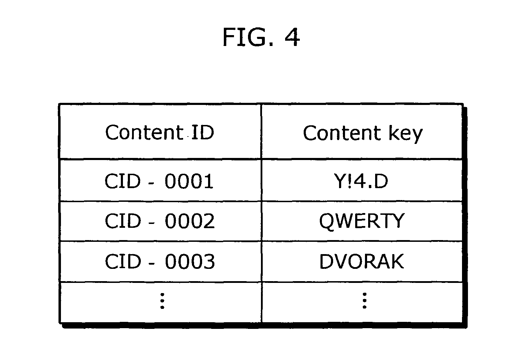

FIG. 4 is a table showing an example of the data structure of content key information stored in the content key storage unit 301 shown in FIG. 3. The following two items are recorded as content key information:
(1) "Content ID"
   An ID for uniquely identifying a content.
(2) "Content key"
   An encryption key used in the encryption of a content.

For example, the content key information stored in the content key information columns of the second row of FIG. 4, indicates that the content indicated by the content ID "CID-0001" is encrypted using the content key "Y!4.D".

### (Use Condition Data Structure)

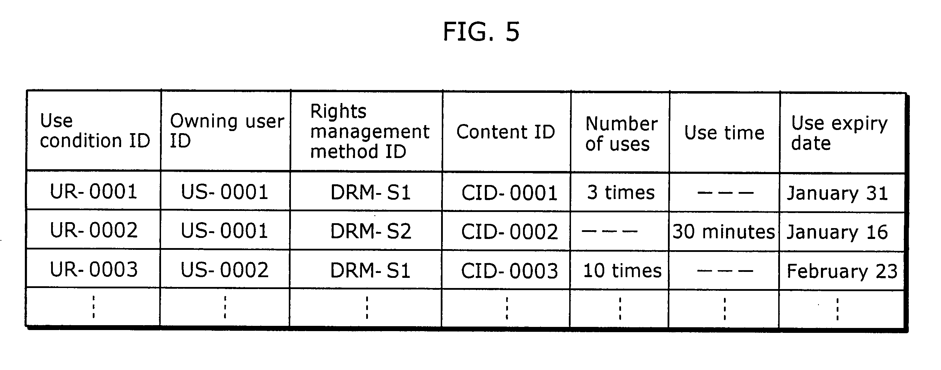

FIG. 5 is a table showing an example of data structure of use condition information stored in the use condition storage unit 303 shown in FIG. 3. The following seven items are recorded as use condition information:
(1) Use condition ID
   An ID for uniquely identifying a use condition.
(2) Owning user ID
   An ID for uniquely identifying the owner of a use condition.
(3) Rights management method ID
   An ID for uniquely identifying the rights management method to be used during license generation.
(4) Content ID
   An ID for identifying the content permitted for use, according to the use condition concerned.
(5) Number of uses
   Information for identifying the maximum number of uses permitted for a content designated by a content ID.
(6) Use time
   Information for identifying the total use time permitted for a content designated by a content ID.
(7) Use expiry date
   Information for identifying the expiration date for the permitted use a content designated by a content ID.

For example, the use condition information stored in the columns of the second row of in FIG. 5 indicates that a user "US-0001" owns a right to use the content designated by content ID "CID-0001", in the rights management method "DRM-S1", for "3 times", until "January 31".

### (License Data Structure)

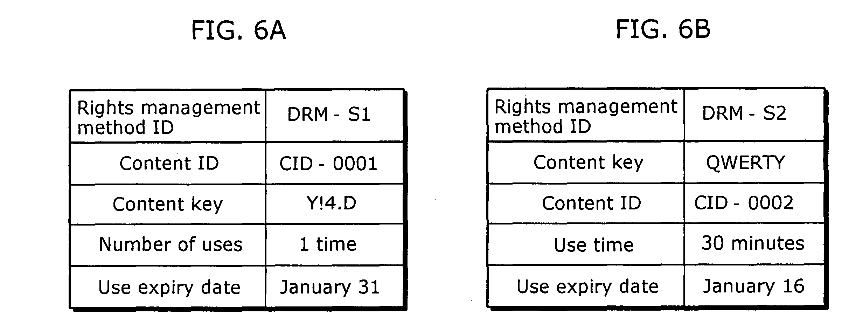

Next, FIG. 6A and FIG. 6B are tables showing examples of data structure of a license, issued to a content reproduction terminal shown in FIG. 1, and which is stored in the license storage unit 203 shown in FIG. 2. Except for the description, at the start of the license, of the "rights management method ID" which stores information for identifying a rights management method, the data structure of a license is different for each rights management method.

First, in FIG. 6A, the data structure of the license for the rights management method S1 indicated by the rights management method ID "DRM-S1" is shown. The following five items are stored as information in the license:
(1) Rights management method ID
   An ID for uniquely identifying a rights management method to be used during use condition judgment.
(2) Content ID
   An ID for identifying the content permitted for use, according to the license concerned.
(3) Content key
   The encryption key used in encrypting a content designated by a content ID.
(4) Number of uses
   Information for identifying the number of uses permitted for a content designated by a content ID.
(5) Use expiry date
   Information for identifying the expiration date for the permitted use of a content designated by a content ID.

For example, the license shown in FIG. 6A indicates that a content designated by the content ID "CID-0001" is encrypted using a content key "Y!4.D", and is permitted to be used for "one time", until "January 31".

Next, FIG. 6B shows the data structure of the license for the rights management method S2 as indicated by the use management method ID "DRM-S2". The following five items are stored as information in the license.
(1) Rights management method ID
   An ID for uniquely identifying a rights management method used during use condition judgment:
(2) Content key
   The encryption key used in encrypting a content designated by a content ID.
(3) Content ID
   An ID for identifying a content permitted for use, according to the license concerned.
(4) Use time
   Information for identifying the total use time permitted for a content designated by a content ID.
(5) Use expiry date
   Information for identifying the expiration date for the permitted use of a content designated by a content ID.

For example, the license shown in FIG. 6B indicates that the content designated by the content ID "CID-0002" is encrypted by the content key "QWERTY", and is permitted to be used for "30 minutes", until January 16.

### (License Issuance)

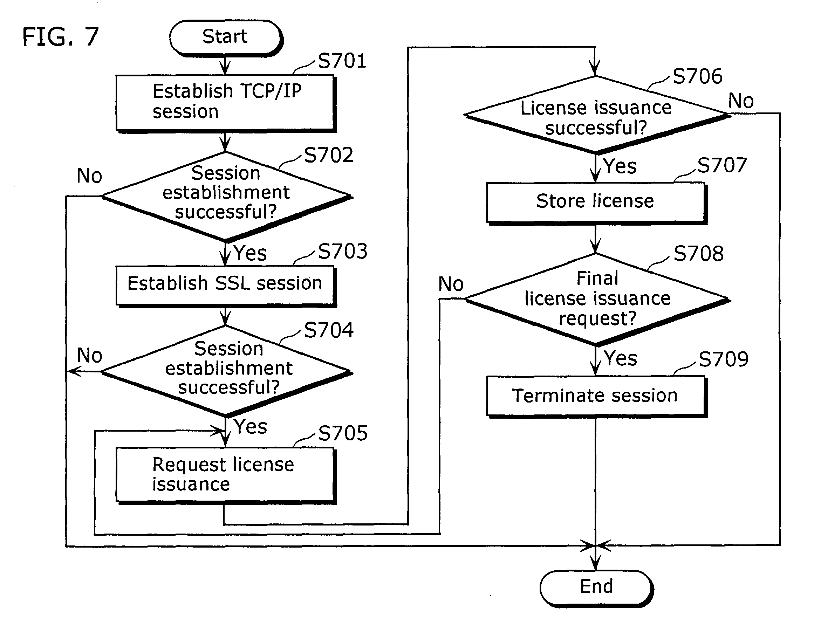

Hereinafter, the operation of each part of the content reproduction system as configured above shall be explained. First, FIG. 7 to FIG. 9 shall be used to explain the process during the issuance of a license, from the license issuance server 103 to the first content reproduction terminal 101.

FIG. 7 is a process flowchart for the first content reproduction terminal 101, during the issuance of a license from the license issuance server 103 shown in FIG. 1, to the first content reproduction terminal 101.

The first content reproduction terminal 101 first makes the input acceptance unit 201 display a contents table listing content names, names of personalities appearing in the content, content distributors, and so on. Then, based on the choice of content name, and so on, from the terminal user, the first content reproduction terminal 101 obtains the content ID of the desired content. In addition, the input acceptance unit 201 displays, together in the listing, for example, the type of rights management method, the name of the company that manages a copyright, or the like. Then, based on the user's selection of a desired rights management method or copyright management company, the rights management method ID is obtained. When a screen display accepting inputs for the desired number of uses and use time for the content is displayed in conformance to the rights management method selected, the user inputs the desired number of uses, and desired use time, following the instructions displayed on screen. It should be noted that the rights management method ID is not limited to the type of rights management method, the name of the copyright management company, or the like. It is possible that other specific items displayed in the listing on the input acceptance unit 201, such as content distributors, for example, may also be assigned a correspondence so that when a user selects a content distributor, the rights management method ID corresponding to the selected content distributor can be obtained.

In such a manner, the first content reproduction terminal 101 accepts inputs instructing content reproduction from a user, through the input acceptance unit 201, and requests the license issuance server 103 for a license issuance, using the cipher communication unit 202. Here, the cipher communication unit 202 first requests the license issuance server 103 to establish a TCP/IP session (S701).

Next, if the TCP/IP session is established, the cipher communication unit 202 requests the license issuance server 103 to establish an SSL session. In an SSL session, authentication between the communicating parties is performed first to prevent spoofing by a third party. In addition, the encryption key to be used in the encryption of a message is shared within the communication session. In the ensuing communication, the message is encrypted using such encryption key to prevent illegal tapping by a third party. In addition, a signature is added in the message, using a unidirectional function such as SHA-1, to prevent manipulation by a third party. Furthermore, a sequence number is added in the message, which prevents message-resend attacks (S702 to S703).

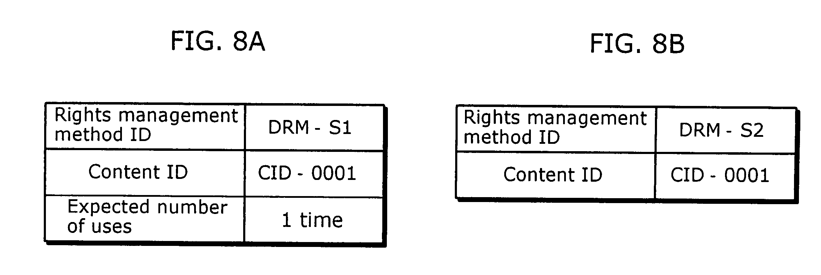

If the SSL session is established, the cipher communication unit 202 then requests the license issuance server 103 for the issuance of a license. Here, the message for the license issuance request is individualized for each rights management method. FIG. 8A is a table showing an example of data structure of a request message for the issuance of a license in the rights management method S1 shown in FIG. 5. The following three items are stored as information in the request message for the issuance of a license in the rights management method S1:
(1) Rights management method ID
   An ID for uniquely identifying the rights management method for a license requested for issuance.
(2) Content ID
   An ID for identifying a content permitted for use, according to the license requested for issuance.
(3) Expected number of uses
   Information for identifying the number of uses expected for a content (in other words, the number of uses desired by a user for a content) designated by a content ID.

In contrast, the license issuance request message for the rights management method S2 contains a different data structure. FIG. 8B is a table showing an example of data structure of a request message for the issuance of a license in the rights management method S2 shown in FIG. 5. As shown in FIG. 8B, two items are stored as information in the request message for the issuance of a license in the rights management method S2. Accordingly, the number of uses, usage time, and so on, which is equivalent to the "expected number of uses" permitted for a content according to this license, shall be pre-determined values.
(1) Rights management method ID
(2) Content ID

Here, for example, if the rights management method for the license requested by the first content reproduction terminal 101 is the rights management method S2, a license issuance request message storing the above two items of information is transmitted to the license issuance server 103 (S704 to S705).

If the license for the license issuance request message transmitted is received successfully, the cipher communication unit 202 stores such received license into the license storage unit 203 (S706 to S707).

At this point, if there are no more licenses being requested of issuance, the cipher communication unit 202 terminates the session (S708 to S709). If there are still licenses without issuance requests, additional license issuance request messages are prepared and transmitted to the license issuance server 103 (S705 to S707).

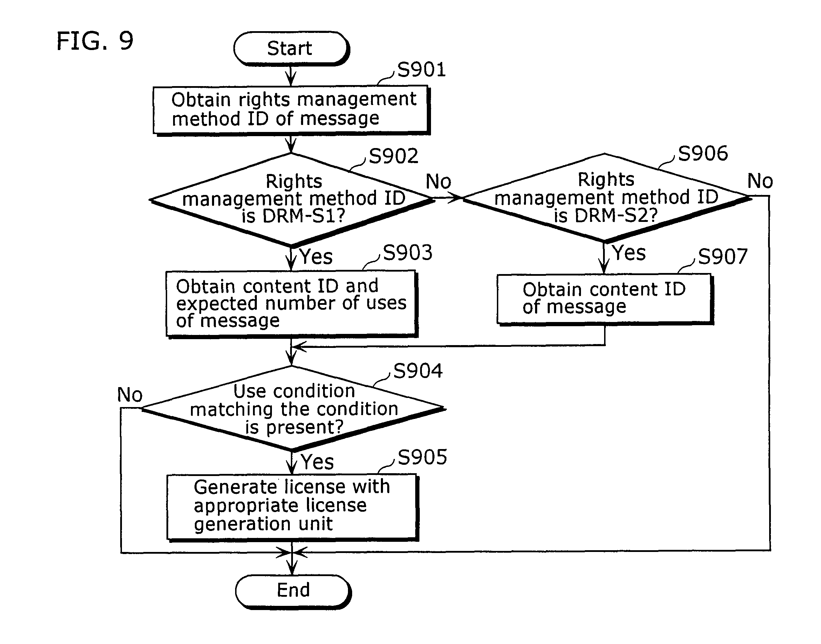

FIG. 9 is a flowchart showing the license generation process in the license issuance server 103, when a request for license issuance is received from the first content reproduction unit 101 shown in FIG. 1.

Using authentication information during the establishment of the SSL session as a basis, the license issuance server 103 previously obtains the user ID of the user making the request. Now, at this point, when the cipher communication unit 305 receives a license issuance request, it first obtains the rights management method ID, found at the start of the message (S901).

If the rights management method ID obtained is "DRM-S1", the license issuance request message is taken as being one in the rights management method S1, and the cipher communication unit 305 obtains the content ID and the expected number of uses, which are the details in the continuation of the message (S902 to S903).

Moreover, if the rights management method ID obtained is "DRM-S2", the license issuance request message is taken as being one in the rights management method S2, and the cipher communication unit 305 obtains the content ID, which is the substance in the continuation of the message (S906 to S907).

Here, since only two types of rights management methods are presumed, in the case where rights management method IDs other than for the two are received, license generation fails, and the cipher communication unit 305 returns a message indicating the license issuance failure to the first content reproduction terminal 101 (S906 to End).

Now, in the case where the rights management method ID obtained by the cipher communication unit 305 is "DRM-S1" or "DRM-S2", the method selection unit 304 proceeds by searching, the use condition that complies with the designated use condition, from among the use conditions stored in the use condition storage unit 303. Here, the method selection unit 304 searches if the previously obtained user ID matches the "owning user ID" in the use condition information, and also if the content ID included in the license issuance request message matches the "content ID" in the use condition information. In the case where a matching item is found, it further verifies whether or not the "rights management method ID" for the use condition information concerned, matches the right management method ID included in the license issuance request message. In the case of a further match, an issuable use condition is said to be present (S904).

At this point, in the case where a matching use condition is not present, license issuance fails. The method selection unit 304 relays to the cipher communication unit 305 that the license generation has failed. With this, the cipher communication unit 305 returns a message indicating the license issuance failure, to the first content reproduction terminal 101 (S904 to End).

In the case where an issuable use condition is present, the method selection unit 304 instructs the license generation unit 302 identified by the "rights management method ID", to generate a license. The instructed license generation unit 302 performs the process specific to the rights management method concerned, and generates the license required for issuance to the first content reproduction unit 101. For example, in the case where the license issuance message for a use condition with use condition information of "three times" for the number of uses, and "January 31" for use expiry date, as in FIG. 5, is a license issuance message, as shown in FIG. 8A, having an expected number of uses as "one time", the license generation unit 302 corresponding to the rights management method S1 generates a license with a number of uses set at "one time" and a use expiry date set at "January 31", as that shown in FIG. 6A. At the same time, it updates the use conditions stored in the use condition storage unit 303, according to the details of the license issued (S905).

### (Content Reproduction)

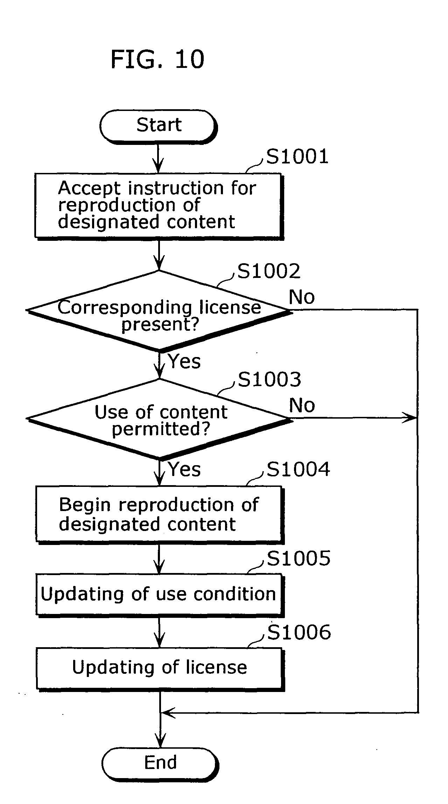

Next, FIG. 10 shall be used to explain the process of content reproduction in the first content reproduction terminal 101.

FIG. 10 is a flowchart showing the process of content reproduction in the first content reproduction terminal 101 shown in FIG. 1.

The user of the first content reproduction terminal 101 first selects a content through the input acceptance unit 201, then instructs the reproduction. The reproduction instruction is relayed from the input acceptance unit 201 to the reproduction unit 206. At this point, the reproduction unit 206 obtains the content ID of the designated content from the input acceptance unit 201. Then, in addition, the reproduction unit 206 relays such content ID together with the reproduction instruction, to the method selection unit 205 (S1001).

Next, the method selection unit 205 searches the licenses stored in the license storage unit 203 for a license that matches the designated content ID (S1002).

Here, in the case where a matching license is not present, content reproduction fails (S1002 to End).

Next, the method selection unit 205 obtains the "rights management method ID" described at the start of the license, where it is common for all right management methods. Here, the use condition judgment/update unit 204 corresponding to the "rights management method ID" is asked whether or not the use of the content is permitted. During this inquiry, the use condition included in the license is relayed at the same time. The use condition judgment/update unit 204 judges whether or not the use of the content is permitted based on the use condition included in the license. For example, when "number of uses" is included in the license, use is judged as being permitted if the remaining number of uses is "one time" or more. When "use expiry date" is included in the license, use is judged as being permitted if the present time is equal to or earlier than the "use expiry date" (S1003).

At this point, in the case where it is judged that use is not permitted, content reproduction fails (S1003 to End).

Next, the method selection unit 205 instructs the content decryption unit 207 to decrypt the content. At this point, a content key included in the license is used in the decryption of the content. The content decrypted in such manner is transmitted, via the method selection unit 205, to the reproduction unit 206, where the content is reproduced according to the instruction of the method selection unit 205 (S1004).

In the reproduction of content in the above manner, after the content is reproduced, a message pertaining to the use condition of the content, such as use time, or number of uses, that was consumed as a result of the reproduction, is transmitted from the reproduction unit 206 to the method selection unit 205. Upon receiving the message pertaining to the consumed use condition, the method selection unit 205 identifies the use condition judgment/update unit 204 corresponding to the use condition, and relays the use time, number of uses, or the like, received from the reproduction unit 206. The method selection unit 205 then instructs the identified use condition judgment/update unit 204 to update the use condition. In response, the use condition judgment/update unit 204 receiving the instruction from the method selection unit 205 updates the use condition of the reproduced content (S1005). The updating is done by subtracting such consumed portion of use time, number of uses, or the like, relayed by the method selection unit 205, from the use condition prior to the reproduction of the content.

Subsequently, the use condition judgment/update unit 204 relays, to the method selection unit 205, the updated result of the use condition instructed for updating. Upon receiving the update result, the method selection unit 205 searches within the license storage unit 203 for the license which reads out the use condition prior to updating, and rewrites the use condition of such license with the update result relayed from the use condition judgment/update unit 204 (S1006). As a result, for example, a license with a permitted number of uses of "3 times" prior to content reproduction that is used on the reproduction unit 206 for a number of uses of "one time" only, is updated to reflect a permitted number of uses of "2 times".

### (License Transfer)

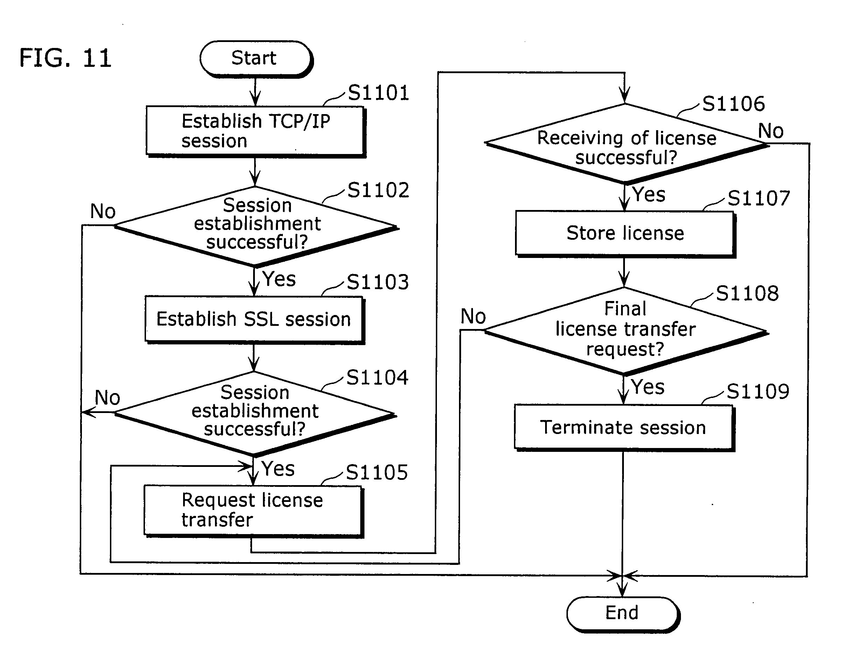

Next, FIG. 11 to FIG. 13 shall be used to explain the process involved during the transfer of a license, from the second content reproduction terminal 102 to the first content reproduction terminal 101.

FIG. 11 is a flowchart showing the process in the first content reproduction terminal 101, during the transfer of a license from the second content reproduction terminal 102 to the first content reproduction terminal 101, shown in FIG. 1.

Upon receiving the instruction from the terminal user through the input acceptance unit 201, the first content reproduction terminal 101 uses the cipher communication unit 202 to request the second content reproduction terminal 102 for a license transfer. At this point, the cipher communication unit 202 first requests the second content reproduction terminal 102 to establish a TCP/IP session (S1101).

If the TCP/IP session is established, the cipher communication unit 202 then requests the second content reproduction terminal 102 to establish an SSL session (S1102 to S1103).

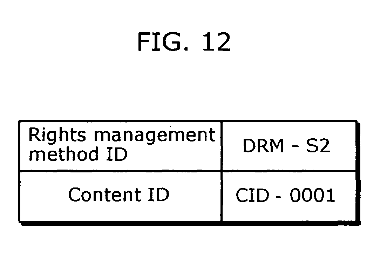

If the SSL session is established, the cipher communication unit 202 then requests the second content reproduction terminal 102 for the license transfer. Here the message for the license transfer request is the same for every rights management method. FIG. 12 shows the data structure of a license transfer request message. The following two items are stored as information in such message:
(1) Rights management method ID
   An ID for uniquely identifying the rights management method of a license requested to be transferred.
(2) Content ID
   An ID for identifying the content permitted for use, according to the license requested to be transferred (S1104 to S1105).

If the license is received successfully, the cipher communication unit 202 stores the received license into the license storage unit 203 (S1106 to S1107).

If there are no more licenses being requested for transfer, the cipher communication unit 202 terminates the session (S1108 to S1109).

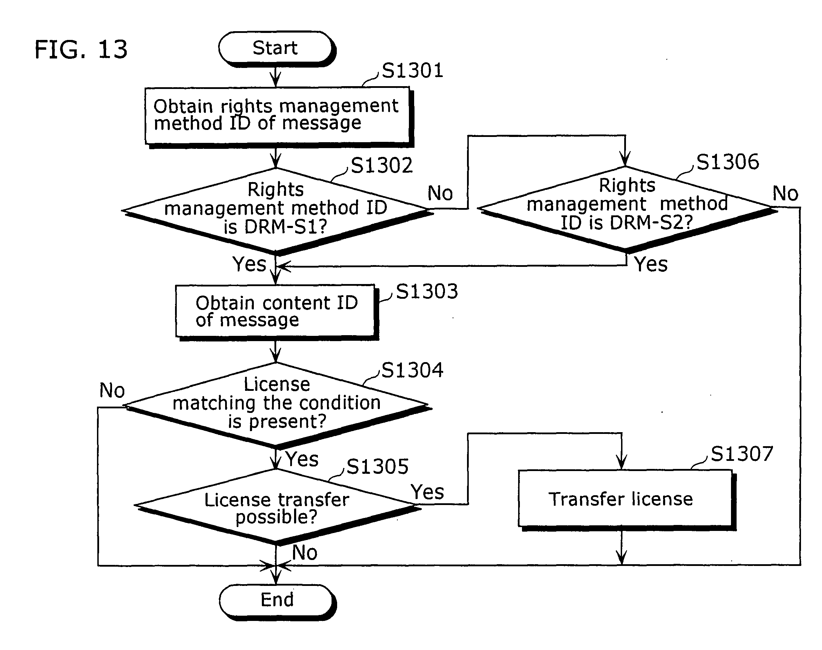

FIG. 13 is a flowchart showing the process in the second content reproduction terminal 102, during the receipt of a license transfer request from the first content reproduction terminal 101 shown in FIG. 1.

Upon receiving a license transfer request from the first content reproduction terminal 101, the cipher communication unit 202 of the second content reproduction terminal 102 first obtains the rights management method ID found at the start of the message (S1301).

If the rights management method ID obtained is "DRM-S1" or "DRM-S2", the cipher communication unit 202 obtains the content ID from the license transfer request message (S1302 to S1303, S1306).

Here, since only two types of rights management methods are presumed, in the case where rights management method IDs other than for the two are received, license transfer fails. The cipher communication unit 202 returns a message indicating the license transfer failure, to the first content reproduction terminal 101, and terminates the process (S1306 to End).

Now, if the rights management method ID obtained is "DRM-S1" or "DRM-S2", a license that matches the designated use condition is searched for from among the licenses stored in the license storage unit 203. Here, a license with a "content ID" that matches the content ID included in the license transfer request message is searched for. In the case where a match is found, a license for which transfer is permitted is said to be present (S1304).

Here, in the case where a matching license is not present, license transfer fails. The cipher communication unit 202 returns a message indicating the license transfer failure, to the first content reproduction terminal 101, and terminates the process (S1304 to End).

In the case where a license is present, the use condition judgment/update unit 204 corresponding to the rights management method ID is asked whether or not transfer is permitted. Here, it is assumed that at all times, transfer is judged as being permitted for management method S1, and not permitted for rights management method S2. If the transfer is judged as being permitted as a result of such judgment, the license is transmitted to the first content reproduction terminal 101, and the license is deleted from the license storage unit 203 (S1305, S1307).

At this point, in the case where transfer is not permitted, license transfer fails. The cipher communication unit 202 returns a message indicating the license transfer failure, to the first content reproduction terminal 101, and terminates the process (S1304 to End).

As mentioned above, according to the present embodiment, it is possible to generate licenses based on a plurality of different rights management methods, without any conflicts, in the single license issuance server 103. In addition, even in the case where licenses are issued based on a plurality of different rights management methods from a single license issuance server 103, licenses can be used, without trouble, on each first content reproduction terminal 101 and second content reproduction terminal 102, according to the rights management method requested by the user. In addition, by sharing operating parts, such as the cipher communication unit 202, the license storage unit 203, the use condition judgment/update unit 204, the reproduction unit 206, and the content decryption unit 207, which can perform processes according to common methods from among the plurality of different rights management methods, the packaging load for content reproduction terminals can be effectively decreased.

Moreover, the communication channel between the license issuance server 103 and the content reproduction terminals, as well as the communication channel within content reproduction terminals, are kept secure through the use of cipher communication. As a result, licenses transmitted on such communication channels are protected from leakages, and the like, and content copyrights can be effectively protected. In addition, since the cipher communication unit 202, the license storage unit 203, the use condition judgment/update unit 204, the method selection unit 205, the reproduction unit 206 and the content decryption unit 207, within the content reproduction terminal are structured in a tamper resistant module, a license to be processed within the content reproduction terminal, a decrypted content, and the like, can be maintained in a secure manner.

Furthermore, although it is assumed here that the license issuance server 103 is connected to the first reproduction terminal 101 and the second terminal 102 via the internet, the connection is not limited to such. Connections by telephone line, purpose-built line, broadcast, or the like, are also possible.

In addition, it is assumed here that there is only one license storage unit 203 in the first content reproduction terminal 101. However, it is also possible to have a respective license storage unit 203, for each rights management method. Moreover, common license storage units 203 may be shared respectively among specified rights management methods.

Furthermore, although a structure in which the reproduction unit 206 and the method selection unit 205 are directly connected is assumed here, the structure is not limited to such. A separate control unit may be provided, for example, and a structure in which the instruction for reproduction is relayed to the method selection unit 205, via such control unit is also possible. Likewise, with regard to the connection patterns among the other parts, it is possible to have connection routes other than those illustrated in the present embodiment.

Moreover, as the cipher communication unit 202, the license storage unit 203, the use condition judgment/update unit 204, the method selection unit 205, and the content decryption unit 207 are executed on the same CPU, they are assumed here as being made tamper resistant as one package, in terms of hardware. However, it is also possible to have a structure where tamper resistance is applied to individual parts or for a number of groups, with a different grouping to that in the present embodiment. In particular, as there are cases where units of the use condition judgment/update unit 204 are added later on, the use condition judgment units added can also be made tamper resistant under a different coverage. Furthermore, in the case where tamper resistance is applied on a different coverage, the use of SAC, bus encryption, or the like, is necessary in communication between parts that do not belong within the same tamper resistance coverage.

In addition, it is assumed here that only the reproduction unit 206 is made tamper resistant under a separate coverage. However, tamper resistance may be applied for it within the same coverage as the cipher communication unit 202, and so on.

Moreover, although the content decryption unit 207 is made tamper resistant under the same coverage as the method selection unit 205, it may be made tamper resistant under the same coverage as the reproduction unit 206. In this case, the content decryption unit 207 shall be invoked by the reproduction unit 206, and the method selection unit 205 transmits a content decryption key, instead of a decrypted content, to the reproduction unit 206.

In addition, although bus encryption is used for the communication between the method selection unit 205 and the reproduction unit 206 here, SAC communication may also be used. In this case in particular, by using an SAC communication that is common to every rights management method instead of different SAC communication for each method, the reduction of packaging load becomes possible.

Furthermore, it is assumed here that the cipher communication unit 202, and so on, is executed on a CPU packaged within a terminal apparatus. However, it can also be implemented using an IC card that can be attached to the terminal apparatus. As a result, it is no longer necessary for a terminal apparatus manufacturer to package security related parts in a terminal, and easier packaging of a terminal becomes possible. In addition, by using an IC card to package only the use condition judgment unit to be added, it becomes possible to add a use condition judgment unit safely.

In addition, although the rights management method ID for identifying the license generation unit 302 to be used in license issuance at the server-side is assumed here to be previously stored within use condition information, the structure is not limited to such. For example, it is also possible to have a structure were the rights management method ID of a license that should be issued is relayed at the same time a request for license issuance from a content reproduction terminal is made. Particularly in this case, since the terminal provides notification of the corresponding rights management method ID required, it becomes possible to issue licenses which are definitely usable.

Moreover, it is assumed here that the license issuance server 103 has only one content key storage unit 301 and only one use condition storage unit 303. However, it is also possible to have one content key storage unit 301 and one use condition storage unit 303, respectively, for each rights management method. In addition, common content key storage units 301 and use condition storage units 303 may be shared by respective groups of specified rights management methods.

Furthermore, it is assumed here that, aside from the "rights management method ID", the data structure of a license is different for each rights management method. However it is possible to have other parts in common, aside from the "rights management method ID". For example, a common storage method for the content ID, content keys, and so on, may be stipulated.

Moreover, here, no countermeasure for a communication interruption during license issuance from the server to the terminal is taken in particular. However, in communication using the internet, a communication interruption can occur as a result of unexpected accidents or the malicious actions of a user. As such, communication interruption countermeasures are generally taken in content distribution systems. Countermeasure methodologies for communication interruptions are published in the official publication of Japanese Laid-Open Patent Application No. 11-505348, and others. To reduce the costs in packaging such communication interruption countermeasures, adopting a common countermeasure for a plurality of right management methods is appropriate. In this case, the mechanism required for the communication interruption countermeasure is used jointly by each rights management method, and in addition, individual messages to be sent or received shall be set for each rights management method.

In addition, a structure where a timer for obtaining the present time for judging the use expiry date of a content is provided individually for each use condition judgment unit, is shown here. However, as the cost of individually packaging mechanisms for securely managing present time is high, the mechanism for managing present time can also be used jointly by every use condition judgment unit.

Moreover, it is assumed here that the license transfer request message is the same for every rights management method. However, it is also possible to have messages with a different data structure for each method.

In addition, it is assumed here that with regard to the transfer of a license, whether or not license transfer is permitted is fixed uniquely for each rights management method. However, it is possible to describe whether or not license transfer is permitted, in the use condition included in a license.

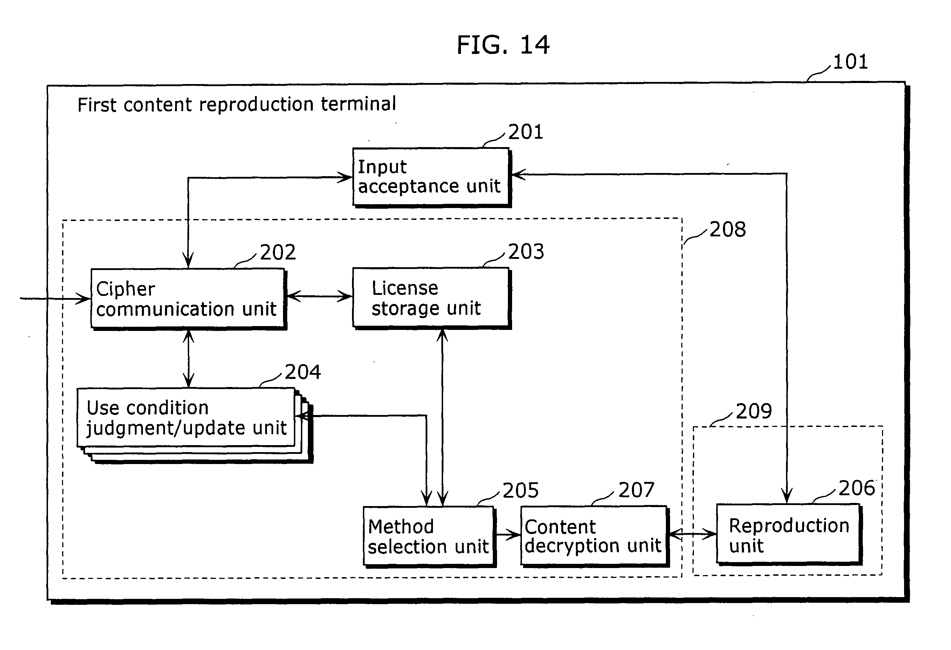

Furthermore, in the present embodiment mentioned above, the internal configuration of the first content reproduction terminal 101 and the second content reproduction terminal 102 is shown in FIG. 2. However, the configuration of the first content reproduction terminal 101 and the second content reproduction terminal 102 is not necessarily limited to such. For example, it is also possible to have a structure where, aside from being inside the tamper resistant unit 208, the content decryption unit 207 is provided in between the method selection unit 205 and the reproduction unit 206. FIG. 14 is a diagram showing an example of a different configuration for first content reproduction terminal 101 and the second content reproduction terminal 102 in the present embodiment. In the case where the first content reproduction terminal 101 is configured as in such diagram, the method selection unit 205 reads out the content key from the license and forwards this to the content decryption unit 207. At the same time, if it is necessary in the case where, according to the use condition judgment/update unit 204, the use of a content is permitted, the method selection unit 205 further transmits to the content decryption unit 207, reproduction control data indicating the use time, number of uses, and so on. The content decryption unit 207 decrypts the encrypted content using the content key obtained from the method selection unit 205, and then transmits the decrypted content to the reproduction unit 206. At the same time, the content decryption unit 207 also transmits the reproduction control data obtained from the method selection unit 205, to the reproduction unit 206, and instructs the reproduction of the decrypted content.

Moreover, in this example, the content decryption unit 207 transmits the decrypted content together with the use condition-based content reproduction control data to the reproduction unit 206, and instructs the reproduction of the content. However, the present invention is not limited as such, and it is also possible to have a structure where the decrypted content and reproduction control data are transmitted to the reproduction unit 206, through different routes. In this case, the increase in signal lines between the tamper resistant unit 208 and the tamper resistant unit 209 is not too favorable. However, it is possible to have, for example, the decrypted content transmitted to the reproduction unit 206, from the content decryption unit 207, and the reproduction control data, as well as the instruction for reproduction, transmitted to the reproduction unit 206, from the method selection unit 205.

Furthermore, in the present embodiment, explanation is made under the assumption that encrypted content are encrypted through a common encryption method. However, the present invention is not limited to such, and content can be encrypted through a different encryption method, respectively, for each rights management method. In this case, it is assumed that the method selection unit 205 relays a rights management method ID at the same time as it relays a content key to the content decryption unit 207. In response, it is assumed that the content decryption unit 207 is provided with a plurality of encrypted content decryption programs for decrypting the encrypted content according to the decryption method to be used for the relayed rights management method. In addition, in this case, a plurality of content decryption units 207 corresponding respectively to each rights management method can also be provided. In such case where a plurality of content decryption units 207 is provided, the method selection unit 205 can select a content decryption unit 207 corresponding to the intended rights management method, in the same method as in the above-mentioned present embodiment where it selects, from among the plurality of use condition judgment/update units 204, one that corresponds to a rights management method.

### Industrial Applicability

The content reproduction terminal in the present invention is useful as a content reproduction apparatus, a personal computer, a Personal Digital Assistant (PDA), a mobile telephone, a Set Top Box (STB), and the like, that are provided with a communication function. The content reproduction system in the present invention distributes licenses for digital contents such as video and music, from a license issuance server to a content reproduction terminal, via a communication network such as a broadcast network or the internet, and is useful as a content use system, and the like, where digital content are used by a content reproduction terminal based on the distributed license. It is particularly useful as a use system for digital copyrighted work in which a content reproduction terminal can use a variety of digital contents while protecting the copyrights of digital contents, in an environment where a plurality of rights management methods co-exist.

## Claims

1. A content reproduction apparatus for reproducing a content that is a digital copyrighted work, based on license information that includes a use condition, said use condition being information indicating an extent of use permitted for the content, the apparatus comprising:
a plurality of use condition judgment units operable to judge, based on a use condition included in each license information, whether or not use of a content corresponding to said each license information is permitted, said each license information being generated under each of a plurality of different rights management methods for realizing protection of content copyrights using copyright protection technology, and said plurality of use condition judgment units corresponding respectively to said plurality of different rights management methods;
a method selection unit operable to select a use condition judgment unit that corresponds to a rights management method by identifying said right management method for the license information corresponding to the content, and cause said selected use condition judgment unit to judge whether or not use of the content is permitted; and
a reproduction unit operable to reproduce the content when it is judged, by said selected use condition judgment unit, that use of said content is permitted.

2. The content reproduction apparatus according to Claim 1, further comprising a cipher communication unit operable to obtain the license information corresponding to a desired content selected by a user, via a cipher communication channel, by performing cipher communication with a server, using an encryption method which is common to, and independent of the rights management methods,
wherein the method selection unit selects a use condition judgment unit by identifying a rights management method for the obtained license information, and causes said selected use condition judgment unit to judge whether or not use of the content is permitted.

3. The content reproduction apparatus according to Claim 2,
wherein the cipher communication unit includes an authentication unit operable to perform authentication with the server to prevent spoofing by a third party, and
the cipher communication unit establishes a session with the server when authentication is successful.

4. The content reproduction apparatus according to Claim 3,
wherein the cipher communication unit further includes at least one of an encryption unit operable to encrypt a message to be sent or received, and a signature affixation unit operable to affix a signature onto the message to be sent or received.

5. The content reproduction apparatus according to Claim 4,
wherein the cipher communication unit includes a communication interruption countermeasure unit operable to take a countermeasure when communication is interrupted while a message is being sent or received.

6. The content reproduction apparatus according to Claim 2, further comprising a license storage unit operable to store the license information,
wherein the cipher communication unit stores the obtained license information into the license storage unit, and
the selected use condition judgment unit judges whether or not use of the content is permitted based on the license information stored in the license storage unit.

7. The content reproduction apparatus according to Claim 6,
wherein the license information further includes a content key for decrypting an encrypted content,
the content reproduction apparatus further comprises a content decryption unit operable to decrypt the encrypted content using the content key,
the method selection unit causes the content decryption unit to decrypt the encrypted content using the content key included in the license information, and
the reproduction unit reproduces the decrypted content.

8. The content reproduction apparatus according to Claim 7,
wherein the license storage unit includes a plurality of license storage subunits for each rights management method,
each of the license storage subunits stores the license information of a corresponding rights management method, and
each of the use condition judgment units judges whether or not use of a content is permitted, based on license information stored in the license storage subunit corresponding to the same rights management method as the use condition judgment unit concerned.

9. The content reproduction apparatus according to Claim 7,
wherein a common SAC is used in communication between the reproduction unit and at least one of the method selection unit, the cipher communication unit, and the content decryption unit.

10. The content reproduction apparatus according to Claim 7,
wherein a common bus encryption is used in communication between the reproduction unit and at least one of the method selection unit, the cipher communication unit, and the content decryption unit.

11. The content reproduction apparatus according to Claim 7,
wherein at least the license storage unit, at least one of the plurality of use condition judgment units, the method selection unit, and the cipher communication unit, are packaged on the content reproduction apparatus using a detachable IC card.

12. The content reproduction apparatus according to Claim 7,
wherein at least the license storage unit, at least one of the plurality of use condition judgment units, the method selection unit, and the cipher communication unit, are formed collectively, in a tamper resistant module.

13. The content reproduction apparatus according to Claim 12,
wherein the tamper resistant module is realized using hardware.

14. The content reproduction apparatus according to Claim 1, further comprising a timing unit operable to count a present time,
wherein each of the use condition judgment units judges whether or not use of a content is permitted by comparing the present time measured by the timing unit with the use expiry date described in a use condition of corresponding license information.

15. A license issuance server for issuing license information for controlling use of a content on a content reproduction apparatus, comprising:
a use condition storage unit operable to store, in advance, a use condition which is information indicating an extent of use permitted for the content which is a digital copyrighted work;
a plurality of license generation units operable to generate license information that includes the use condition, based on a plurality of rights management methods for realizing protection of content copyrights using copyright protection technology, said plurality of license generation units corresponding respectively to said plurality of rights management methods; and
a method selection unit operable to select the license generation unit corresponding to a specific rights management method requested from the content reproduction apparatus, and cause said selected license generation unit to generate the license information requested from said content reproduction apparatus.

16. The license issuance server according to Claim 15, further comprising:
a content key storage unit operable to store, in advance, a content key for decrypting an encrypted content; and
a cipher communication unit operable to perform cipher communication with the content reproduction apparatus,
wherein each of the plurality of license generation units generates license information that includes a content key and a use condition for the same content, and
the cipher communication unit issues the generated license information to the content reproduction apparatus via a cipher communication channel.

17. The license issuance server according to Claim 16,
wherein the cipher communication unit includes an authentication unit operable to perform authentication with the server to prevent spoofing by a third party, and
the cipher communication unit establishes a session with the content reproduction apparatus when authentication is successful.

18. The license issuance server according to Claim 17,
wherein the cipher communication unit further includes at least one of an encryption unit operable to encrypt a message to be sent or received, and a signature affixation unit operable to affix a signature onto the message to be sent or received.

19. The license issuance server according to Claim 18,
wherein the cipher communication unit includes a communication interruption countermeasure unit operable to take a countermeasure when communication is interrupted in the middle of a message being sent or received.

20. A content reproduction system comprising a server and a content reproduction apparatus, said server generating and issuing license information for controlling use of a content on the content reproduction apparatus, and said content reproduction apparatus reproducing the content based on the license information obtained from the server,
wherein the server includes:
a use condition storage unit operable to store, in advance, a use condition which is information indicating an extent of use permitted for a content which is a digital copyrighted work;
a plurality of license generation units operable to generate license information that includes the use condition, based on a plurality of rights management methods for realizing protection of content copyrights using copyright protection technology, said plurality of license generation units corresponding respectively to said plurality of rights management methods; and
a method selection unit operable to select the license generation unit corresponding to a specific rights management method requested from the content reproduction apparatus, and cause said selected license generation unit to generate the license information requested from said content reproduction apparatus, and
the content reproduction apparatus includes:
a plurality of use condition judgment units operable to judge, based on the use condition included in each license information, whether or not use of the content corresponding to said each license information is permitted, said each license information being generated under each of a plurality of different rights management methods for realizing protection of content copyrights using copyright protection technology, and said plurality of use condition judgment units corresponding respectively to said plurality of different rights management methods;
a method selection unit operable to select a use condition judgment unit that corresponds to a rights management method by identifying said right management method for the license information corresponding to the content, and cause said selected use condition judgment unit to judge whether or not use of the content is permitted; and
a reproduction unit operable to reproduce the content when it is judged, by said selected use condition judgment unit, that use of said content is permitted.

21. The content reproduction system according to Claim 20,
wherein the server further includes:
a content key storage unit operable to store in advance, a content key for decrypting an encrypted content; and
a first cipher communication unit operable to perform cipher communication with the content reproduction apparatus,
wherein each of the plurality of license generation units generates license information that includes a content key and a use condition for the same content, and
the first cipher communication unit issues the generated license information to the content reproduction apparatus, via a cipher communication channel, and
the content reproduction apparatus further includes:
a second cipher communication unit operable to obtain the license information corresponding to a desired content selected by a user, via a cipher communication channel, by performing cipher communication with a server, using an encryption method which is common to, and independent of the rights management methods; and
a content decryption unit operable to decrypt an encrypted content, using the content key,
wherein the method selection unit selects a use condition judgment unit by identifying a rights management method for the obtained license information, and causes said selected use condition judgment unit to judge whether or not use of the content is permitted, and causes the decryption unit to decrypt the encrypted content, and
the reproduction unit reproduces the decrypted content.

22. A content reproduction method for reproducing a content that is a digital copyrighted work, based on license information that includes a use condition, said use condition being information indicating an extent of use permitted for the content, the method comprising:
a plurality of use condition judgment steps of judging, based on a use condition included in each license information, whether or not use of a content corresponding to said each license information is permitted, said each license information being generated under each of a plurality of different rights management methods for realizing protection of content copyrights using copyright protection technology, and each of said plurality of use condition judgment steps being different for each of said plurality of different rights management methods;
a method selection step of selecting a use condition judgment step that corresponds to a rights management method by identifying said right management method for the license information corresponding to the content, and causing judgment of whether or not use of the content is permitted in said selected use condition judgment step; and
a reproduction step of reproducing the content, when it is judged in said selected use condition judgment step that use of said content is permitted.

23. The content reproduction method according to Claim 22, further comprising a cipher communication step of obtaining the license information corresponding to a desired content selected by a user, via a cipher communication channel, by performing cipher communication with a server, using an encryption method which is common to, and independent of the rights management methods,
wherein, in the method selection step, a use condition judgment step is selected by identifying the rights management method for the obtained license information, and caused to judge whether or not use of the content is permitted.

24. The content reproduction method according to Claim 23,
wherein the license information further includes a content key for decrypting an encrypted content,
the content reproduction method further includes a content decryption step of decrypting the encrypted content using the content key,
in the method selection step, the encrypted content is caused to be decrypted in the content decryption step using the content key included in the license information, and
in the reproduction step, the decrypted content is reproduced.

25. A license issuance method for issuing license information for controlling use of a content on a content reproduction apparatus,
wherein a use condition which is information indicating the extent of use permitted for a content that is a digital copyrighted work, is stored in advance,
the method comprising:
a plurality of license generation steps of generating license information that includes the use condition, based on a plurality of rights management methods for realizing protection of content copyrights using copyright protection technology, said plurality of license generation steps respectively generating license information in said plurality of rights management methods; and
a method selection step of selecting the license generation step corresponding to a specific rights management method requested from the content reproduction apparatus, and causing the license information requested from said content reproduction apparatus to be generated in said selected license generation step.

26. The license issuance method according to Claim 25,
wherein a content key for decrypting an encrypted content is stored, in advance,
the method further comprises a cipher communication step of performing cipher communication with the content reproduction apparatus,
in the plurality of license generation steps, license information that includes a content key and a use condition for the same content is generated, and
in the cipher communication step, the generated license information is issued to the content reproduction apparatus via a cipher communication channel.

27. A program for a content reproduction apparatus for reproducing a content that is a digital copyrighted work, based on license information that includes a use condition, said use condition being information indicating an extent of use permitted for the content, the program causing a computer to execute:
a plurality of use condition judgment steps of judging, based on a use condition included in each license information, whether or not use of a content corresponding to said each license information is permitted, said each license information being generated under each of a plurality of different rights management methods for realizing protection of content copyrights using copyright protection technology, and each of said plurality of use condition judgment steps being different for each of said plurality of different rights management methods;
a method selection step of selecting a use condition judgment step that corresponds to a rights management method by identifying said right management method for the license information corresponding to the content, and causing judgment of whether or not use of the content is permitted in said selected use condition judgment step; and
a reproduction step of reproducing the content, when it is judged in said selected use condition judgment step that use of said content is permitted.

28. The program according to Claim 27,
wherein license information further includes a content key for decrypting an encrypted content,
the program further including a content decryption step of decrypting an encrypted content using the content key,
in the method selection step, the encrypted content is caused to be decrypted in the content decryption step, using the content key included in the license information, and
in the reproduction step, the decrypted content is reproduced.

29. A program for a license issuance server which issues license information for controlling use of a content on a content reproduction apparatus,
wherein a use condition which is information indicating the extent of use permitted for a content that is a digital copyrighted work, is stored in advance,
the program causing a computer to execute:
a plurality of license generation steps of generating license information that includes the use condition, based on a plurality of rights management methods for realizing protection of content copyrights using copyright protection technology, said use condition judgment units respectively generating license information in said rights management methods; and
a method selection step of selecting the license generation step corresponding to a specific rights management method requested from a content reproduction apparatus, and causing the license information requested from said content reproduction apparatus to be generated in said selected license generation step.

30. The program according to claim 29,
wherein a content key for decrypting an encrypted content is stored, in advance,
the program further includes a cipher communication step of performing cipher communication with the content reproduction apparatus,
in each of the plurality of license generation steps, license information that includes a content key and a use condition for the same content is generated, and
in the cipher communication step, the generated license information is issued to the content reproduction apparatus via a cipher communication channel.
